(19) Europäisches Patentamt
European Patent Office
Office européen des brevets

(11) **EP 4 741 089 A1**

(12) **EUROPÄISCHE PATENTANMELDUNG**

(43) Veröffentlichungstag:
**13.05.2026 Patentblatt 2026/20**

(21) Anmeldenummer: **24211658.0**

(22) Anmeldetag: **08.11.2024**

(51) Internationale Patentklassifikation (IPC):
***B23K 9/09*** *(2006.01)* ***B23K 9/095*** *(2006.01)*

(52) Gemeinsame Patentklassifikation (CPC):
**B23K 9/092; B23K 9/0956**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **FRONIUS INTERNATIONAL GmbH**
**4643 Pettenbach (AT)**

(72) Erfinder: **Söllinger, Dominik**
**4643 Pettenbach (AT)**

(74) Vertreter: **Patentanwälte Pinter & Weiss OG**
**Prinz-Eugen-Straße 70**
**1040 Wien (AT)**

(54) **KURZLICHTBOGEN-FÜGEVERFAHREN UND FÜGEVORRICHTUNG**

(57)     Um eine robuste Methode zur Durchführung eines Kurzlichtbogen-Fügeverfahrens mit Lichtbogenphasen (LP) und Kurzschlussphasen (KP) bereitzustellen, wobei Schweißspritzer zuverlässig reduziert und teure Messtechnik vermieden werden, wird in einer ersten Teilphase (KP-1) der Kurzschlussphasen (KP) ein Kurzschlussstrom (IK) ausgehend von einem zu Beginn der ersten Teilphase (KP-1) vorliegenden Anfangsstrom ($IK_1$) auf einen vorgegeben Abschmelzstrom ($IK_m$) erhöht, es wird in einer der ersten Teilphase (KP-1) nachfolgenden, zweite Teilphase (KP-2) der Kurzschlussphasen (KP) der Kurzschlussstrom (IK) entsprechend einem vorgegebenen Kurzschlussstrom-Sollverlauf ($I_{soll}$) reduziert, und es wird ein Tropfen-Istwert ($T_{ist}$), welcher einen Istwert eines Tropfen-Parameters (RT) des Schweißtropfens (T) beschreibt, ermittelt und herangezogen, um den Kurzschlussstrom-Sollverlauf ($I_{soll}$) in Abhängigkeit des Tropfen-Istwertes ($T_{ist}$) zu korrigieren.

FIG. 4

**Beschreibung**

Die gegenständliche Erfindung betrifft ein Kurzlichtbogen-Fügeverfahren zum Erzeugen einer Fügenaht auf einem Werkstück, das Kurzlichtbogen-Fügeverfahren aufweisend Lichtbogenphasen, in denen zwischen einer abschmelzenden Fügeelektrode und einem Werkstück ein Lichtbogen brennt, welcher die Fügeelektrode in einem dem Werkstück zugewandten Endbereich der Fügeelektrode unter Ausbildung eines Schweißtropfens aufschmilzt, und sich mit den Lichtbogenphasen zyklisch abwechselnde Kurzschlussphasen, in denen die Fügeelektrode das Werkstück berührt und ein Kurzschlussstrom zum Abschmelzen des Schweißtropfens durch den Schweißtropfen in das Werkstück fließt.

Die Erfindung betrifft ferner eine Fügevorrichtung zur Durchführung eines Kurzlichtbogen-Fügeverfahrens, die Fügevorrichtung aufweisend einen Brenner, eine Vorschubeinheit zum Zuführen einer abschmelzenden Fügeelektrode, eine Stromquelle zur elektrischen Versorgung der Fügeelektrode und eine Steuereinheit zur Steuerung der Fügevorrichtung.

Lichtbogen-Intervallschweißen und Lichtbogen-Intervalllöten sind vielfältig eingesetzte Fügeverfahren, die sich insbesondere zur Regulierung von Temperaturverteilungen in gefügten Werkstücken eignen, oder zur Kontrolle des Wärmeeintrages, der während des Lichtbogen-Schweißens oder Lichtbogen-Lötens in ein Werkstück eingebracht wird. Die nachfolgenden Ausführungen befassen sich mit der Verwendung von Kurzlichtbögen in diesen Fügeverfahren, wobei mittels des generischen Begriffs "Kurzlichtbogen-Fügen" sowohl Kurzlichtbogen-(Intervall)schweißen als auch Kurzlichtbogen-(Intervall)löten umfasst sind.

Auf Kurzschlüssen basierende Lichtbogenfügeverfahren weisen zwei grundlegende zeitliche Phasen auf, Lichtbogenphasen und Kurzschlussphasen. Lichtbogenphasen und Kurzschlussphasen wechseln sich zyklisch ab. Eine Lichtbogenphase folgt typischerweise unmittelbar auf eine Kurzschlussphase, und eine Kurzschlussphase typischerweise unmittelbar auf eine Lichtbogenphase. Bei Lichtbogenfügeverfahren mit abschmelzender Drahtelektrode wird die Drahtelektrode in einer Lichtbogenphase aufgeschmolzen, wodurch sich ein während des Aufschmelzens wachsender Schweißtropfen bildet. Der Schweißtropfen wird durch eine kontinuierliche Drahtzufuhr an das zu fügende Werkstück herangeführt. Am Ende einer Lichtbogenphase berührt der Schweißtropfen das Werkstück, was zum Erlöschen (auch "Abreißen") des Lichtbogens führt und den Beginn einer Kurzschlussphase einläutet. Infolge der Berührung des Werkstücks durch den Schweißtropfen bildet sich ein Kurzschluss zwischen der Drahtelektrode und dem Werkstück ("Kurzschlussbrücke"). Durch den Schweißtropfen fließt in der Folge ein Kurzschlussstrom, der die Drahtelektrode und auch den Schweißtropfen weiter erwärmt.

Durch die fortwährende Erwärmung wird der Schweißtropfen eingeschnürt, insbesondere im Bereich eines Flüssig-Fest-Übergangs der Drahtelektrode. Es kommt zu einer fortlaufenden Verjüngung des Schweißtropfens. Ist der Querschnitt des Schweißtropfens an zumindest einer Stelle so gering, dass der Schweißtropfen nicht mehr an der Drahtelektrode gehalten werden kann, so löst sich der Schweißtropfen von der Drahtelektrode ab und geht in ein Schmelzbad am Werkstück über, wo sich in weiterer Folge eine Fügenaht ausbildet. Der Vorgang des Ablösens des Schweißtropfens wird auch als "Aufbruch des Kurzschlusses" oder "Aufbruch der Kurzschlussbrücke" bezeichnet. Der mit dem Aufbruch des Kurzschlusses einhergehende Tropfenübergang findet beim Kurzlichtbogenprozess ausschließlich in Kurzschlussphasen statt. Bei anderen Lichtbogenarten ist ein Tropfenübergang auch außerhalb von Kurzschlussphasen möglich, d.h. teilweise auch während Lichtbogenphasen. Ein Aufbrechen des Kurzschlusses hat zur Folge, dass die niederohmige Kurzschlussbrücke zum Werkstück, die sich über den Schweißtropfen gebildet hat, wieder verloren geht und die Kurzschlussphase endet. Durch das Ablösen des Schweißtropfens entsteht eine Lücke zwischen der Drahtelektrode und dem Werkstück, in der es im nächsten Prozessschritt zu einer Wiederzündung des Lichtbogens kommt. Die Wiederzündung des Lichtbogens markiert einerseits das Ende der Kurzschlussphasen, andererseits den Neubeginn der Lichtbogenphasen.

Wie aus dem Stand der Technik bekannt ist, z.B. aus EP 1 949 997 A1, kann es im Zuge des Aufbruchs eines Kurzschlusses, d.h. zu Ende des Kurzschlusses, zu ungewünschten Schweißspritzern kommen. Ein Grund dafür ist, dass ein gegebenenfalls hoher Kurzschlussstrom gegen Ende einer Kurzschlussphase durch einen nur noch geringen Querschnitt fließen muss, was die Übertragung von hoher (elektrischer) Energie durch ein lediglich kleines Volumen erfordert. Dieses kleine Volumen wird dabei stark erhitzt und kann sich in Folge dessen unkontrolliert vom ungeschmolzenen Teil der Drahtelektrode, aber auch vom Rest des Schweißtropfens, lösen. Eine weitere Ursache für Schweißspritzer im Rahmen des Kurzlichtbogenfügens kann sein, dass ein Teil des Schweißtropfens aufgrund einer zu hohen Energetisierung aufplatzt und als Schweißspritzer neben dem Schweißbad landet.

Schweißspritzer treten insbesondere dann auf, wenn, wie in der Praxis vielfach üblich, der Kurzschlussstrom in den Kurzschlussphasen kontinuierlich erhöht wird, z.B. linear, exponentiell, quadratisch, oder auch stufenweise, um ein zügiges Erwärmen und Ablösen von Schweißtropfen sicherzustellen. Ein wesentlicher Nachteil dieser Variante ist, dass der Kurzschlussstrom bei Kurzschlussaufbruch (Lichtbogenwiederzündung) meist sehr hoch ist, wodurch teils signifikante Schweißspritzer entstehen. Auch kommt es zu mitunter starken Schwankungen der Stromstärke und damit zu unprädizierbarem Verhalten von Fügeparemtern.

Um mit dieser Problematik umzugehen, wurden unterschiedliche Vorgehensweisen entwickelt. In einer ersten, weitverbreiteten Form der Kurzschlussbehandlung wird vorgesehen, dass der Zeitverlauf des elektrischen Widerstandes der Kurzschlussbrücke, d.h. der elektrische Widerstand des Schweißtropfens, überwacht wird. Es ist bekannt, dass dieser Widerstand kurz vor dem Kurzschlussaufbruch zumindest näherungsweise exponentiell ansteigt, da sich bei Einschnürung des Tropfens eine Querschnittsänderung gemäß

$$d = \sqrt{\frac{4A}{\pi}}$$ einstellt. Bei einer gegen Null strebenden Querschnittsfläche A verläuft der Tropfen-Durchmessers d entlang des stets steiler werdenden Astes der vorstehenden Wurzelfunktion neben dem Wert A=0. Die Messung eines Widerstandsverlaufes, aber auch die Messung eines Spannungsverlaufes einer zumindest teilweise über den Schweißtropfen abfallenden Spannung, aus der der Widerstand ermittelt werden kann, gibt folglich Aufschluss über den Durchmesser und damit den Zustand einer Einschnürung des Schweißtropfens. Bei Detektion einer fortschreitenden Tropfeneinschnürung wird der Kurzschlussstrom reduziert, sodass geringere Schweißspritzer entstehen und die Prozessstabilität erhöht wird. Ein Nachteil dieser Variante ist jedoch, dass die vorgenannten Prozessgrößen mit hoher Präzision gemessen werden müssen.

In einer weiteren Vorgehensweise zur Kurzschlussbehandlung wird ein aktiver Drahtrückzug vorgesehen, wodurch die Stromstärke während des Kurzschlusses reduziert werden kann, und in der Folge ebenso Schweißspritzer vermindert werden können. Ein Nachteil dieser Variante ist, dass aufwendige und teure Aktuatorik vorgesehen werden muss, um den aktiven Drahtrückzug mit ausreichender Präzision und Dynamik realisieren zu können.

Es ist demnach eine Aufgabe der gegenständlichen Erfindung, eine robuste Methode zur Kurzschlussbehandlung bereitzustellen, die Schweißspritzer zuverlässig reduziert und keine teure Messtechnik erfordert.

Diese Aufgabe wird für ein eingangs genanntes Kurzlichtbogen-Fügeverfahren sowie für eine eingangs genannte Fügevorrichtung durch die Merkmale der Kennzeichen der unabhängigen Ansprüche gelöst.

Erfindungsgemäß werden in den Kurzschlussphasen jeweils eine erste Teilphase und eine der ersten Teilphase nachfolgende zweite Teilphase vorgesehen. In der ersten Teilphase wird der Kurzschlussstrom ausgehend von einem zu Beginn der ersten Teilphase vorliegenden Anfangsstrom erhöht auf einen vorgegeben Abschmelzstrom, welcher Abschmelzstrom vorzugsweise um mehr als ein 0,5-Faches oder um mehr als ein 1-Faches oder um mehr als ein 5-Faches oder um mehr als ein 10-Faches über dem Anfangsstrom liegt. In der zweiten Teilphase, die in einer bevorzugten Ausgestaltung selbst Subphasen enthalten kann, wird der Kurzschlussstrom entsprechend einem vorgegebenen Kurzschlussstrom-Sollverlauf reduziert, wobei ein Tropfen-Istwert, welcher einen Istwert eines Tropfen-Parameters des Schweißtropfens beschreibt, ermittelt wird und dazu herangezogen wird, den Kurzschlussstrom-Sollverlauf in Abhängigkeit des Tropfen-Istwertes zu korrigieren.

Durch die erfindungsgemäße Vorgehensweise wird eine Vielzahl von vorteilhaften Effekten realisiert und kombiniert. So wird der Abschmelzstrom vorzugsweise hoch gewählt, besonders bevorzugt als der höchste in der Kurzschlussphase auftretende Strom, d.h. als Maximalstrom der Kurzschlussphase, sodass in der ersten Teilphase ein zügiges Erwärmen des Schweißtropfens sichergestellt wird. Der hohe Kurzschlussstrom wird jedoch nicht über die gesamte Kurzschlussphase aufrechterhalten oder gar noch weiter erhöht, sondern wieder reduziert und ferner gezielt derart gesteuert, dass sich ein für das Gesamtverhalten des Fügeverfahrens vorteilhafter Kurzschlussstrom-Zeitverlauf einstellt, der gegen Ende der Kurzschlussphasen auf, im Vergleich zum Abschmelzstrom, geringem Niveau verläuft und damit zu nur geringen Spritzern führt. Durch das erfindungsgemäße Verfahren wird es möglich, einen präzise an die Gegebenheiten einer spezifischen Fügeaufgabe angepassten Zeitverlauf des Kurzschlussstromes vorzugeben, um am Ende der Kurzschlussphase einen nur noch geringen Kurzschlussstrom vorzufinden, der ebenso nur noch geringe Schweißspritzer zur Folge hat. Es ist anzumerken, dass das erfindungsgemäße Erhöhen des Kurzschlussstromes in der ersten Teilphase nicht derart zu verstehen ist, dass der Kurzschlussstrom ausschließlich monoton oder ausschließlich streng monoton erhöht wird. Auch ein phasenweises oder kurzfristiges Absenken des Kurzschlussstromes am Weg vom Anfangsstrom zum Abschmelzstrom kann vorgesehen werden, wobei insbesondere zu Beginn einer ersten Kurzschlussphase ein Absenken ausgehend vom Anfangsstrom vorteilhaft sein kann, wie an späterer Stelle im Detail erläutert wird.

Als Tropfen-Parameter können geometrische Parameter des Schweißtropfens angesetzt werden, z.B. ein Durchmesser oder ein Umfang oder eine Einschnürung, oder es kann auch ein elektrischer Parameter angesetzt werden, wie ein elektrischer Widerstand oder ein Leitwert oder eine Impedanz oder eine Admittanz oder eine Leistung oder eine über den Tropfen abfallende elektrische Spannung, je nach individuellen Anforderungen einer spezifischen Anwendung. Die Erfindung bietet in diesem Punkt große Flexibilität.

In einer besonders vorteilhaften Weise kann der Tropfen-Istwert mit einem vorgegebenen Tropfen-Sollwert verglichen werden, vorzugsweise durch Subtraktion des Tropfen-Istwertes vom Tropfen-Sollwert, insbesondere um ein Tropfen-Vergleichsergebnis zu ermitteln, welches bei Subtraktion einem Regelfehler entspricht, und der Kurzschlussstrom-Sollverlauf, auf den der Kurzschlussstrom eingestellt oder eingeregelt wird, kann derart korrigiert werden, dass eine Abweichung zwischen dem Tropfen-Istwert und dem vorgegebenen Tropfen-Sollwert verringert wird. Dazu kann beispielsweise ein vorgegebener Zusammenhang zwischen dem Tropfen-Vergleichsergebnis und dem Kurzschlussstrom-Sollverlauf eingesetzt werden, oder es kann ein Regelgesetz angesetzt werden, das aus dem Tropfen-Vergleichsergebnis eine geeignete Änderung des Kurzschlussstrom-Sollverlaufes ermittelt. Die Erfindung eröffnet auf diese Weise die Möglichkeit, moderne Regelungstechnik (Sliding Mode, MPC, flachheitsbasierte Regelung etc.) im Bereich der Vorgabe / Einstellung / Regelung von Kurzschlussströmen einzusetzen. Gemäß den vorstehenden Ausführungen kann ein Kurzschlussstrom-Sollverlauf gezielt und kontrolliert erhöht werden, wenn beispielsweise ein elektrischer Widerstand eines Tropfens zu gering ist oder ein Tropfendurchmesser zu groß ist oder eine über dem Tropfen abfallende Spannung zu klein ist, oder es kann ein Kurzschlussstrom-Sollverlauf gezielt verringert werden, wenn beispielsweise ein elektrischer Widerstand eines Tropfens zu groß ist oder ein Tropfendurchmesser zu gering ist oder eine über dem Tropfen abfallende Spannung zu groß ist.

Grundsätzlich kann der Kurzschlussstrom-Sollverlauf empirisch vorgegeben werden, z.B. auf Basis von Messungen, die im Zuge vorhergehender Fügeprozesse erfasst worden sind, oder der Kurzschlussstrom-Sollverlauf kann aus einer Datenbank bezogen werden, oder aber auch mithilfe von numerischen Simulationen des Kurzlichtbogen-Fügeverfahrens bestimmt werden. Die Möglichkeit, numerische Simulationen in das erfindungsgemäße Verfahren miteinzubeziehen, ermöglicht die Hebung umfassender Verbesserungspotenziale. Obwohl die numerische Simulation zur Unterstützung der Planung von Fügeverfahren bekannt ist, wurden numerische Simulationen bislang nicht dazu eingesetzt, um die Tropfenablösung beim Kurzlichtbogenfügen zu optimieren. In einer bevorzugten Weise kann die numerische Simulation dabei als Offline-Simulation vor Beginn des Kurzlichtbogen-Fügeverfahrens durchgeführt werden, was die Verwendung komplexer und detaillierter Modelle erlaubt und zu besonders präzisen Simulationsergebnissen führt, oder es kann die numerische Simulation als Online-Simulation während des Kurzlichtbogen-Fügeverfahrens durchgeführt werden, wo typischerweise einfachere Modell verwendet werden, aber dafür während des Betriebes mithilfe von Simulationen z.B. auf Änderungen im Schweißprozess reagiert werden kann.

In einer weiteren vorteilhaften Ausgestaltung der Erfindung können in den zweiten Teilphasen jeweils eine erste Subphase und eine der ersten Subphase nachfolgende zweite Subphase vorgesehen werden, wobei in der ersten Subphase keine Korrektur des Kurzschlussstrom-Sollverlaufes vorgesehen wird, und nur in der zweiten Subphase eine Korrektur des Kurzschlussstrom-Sollverlaufes vorgesehen wird. Auf diese Weise wird erreicht, dass aufwendige Messungen und/oder Berechnungen auf einen kleinen Teil der zweiten Teilphase KP-2 beschränkt sind. In einer bevorzugten Weisen kann die erste Subphase hierbei zumindest so lange gewählt werden, wie die zweite Subphase, d.h. die beiden Subphasen können gleich lange gewählt werden, oder die erste Subphase kann länger gewählt werden als die zweite Subphase. Damit kann der rechnerische Aufwand, der in der zweiten Subphase höher ist, geringgehalten werden. Sollte in der zweiten Subphase noch keine Ablöse des Tropfens erfolgen, kann neuerlich korrigiert werden und eine weitere Subphase folgen.

Um bereits bei der Strukturierung der Kurzschlussphasen insgesamt die Komplexität gering zu halten, kann vorgesehen sein, dass die Kurzschlussphasen lediglich in erste und zweite Teilphasen unterteilt werden, d.h. dass eine Summe von einer zeitlichen Länge einer in einer Kurzschlussphase vorgesehenen ersten Teilphase mit einer zeitlichen Länge einer in der Kurzschlussphase vorgesehenen zweiten Teilphase einer zeitlichen Länge der Kurzschlussphase entspricht. Wie an späterer Stelle detailliert ausgeführt wird, ist es jedoch ebenso denkbar, noch weitere Phasen in den Kurzschlussphasen vorzusehen.

Es sei angemerkt, dass die erfindungsgemäße Vorgehensweise mit den vorstehend genannten, aus dem Stand der Technik bekannten Ansätzen kombiniert werden kann, sodass beispielsweise auch im Rahmen eines erfindungsgemäßen Fügeverfahrens vorgesehen werden kann, die Fügeelektrode während der Kurzschlussphasen vom Werkstück wegzubewegen, um durch die Draht-Rückbewegung das Auflösen des Kurzschlusses zusätzlich zu unterstützen.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt

Fig.1 einen standardisierten Aufbau einer Fügevorrichtung,
Fig.2a-d einen realen Ablauf beim Ausbilden und Ablösen eines Schweißtropfens,
Fig.3a-c drei Varianten zur Kurzschlussbehandlung nach Stand der Technik,
Fig.4 Signalverläufe im Zuge einer erfindungsgemäßen Kurzschlussbehandlung,
Fig.5 einen Koppelplan zur regelungstechnischen Umsetzung der erfindungsgemäßen Kurzschlussbehandlung.

Die gegenständliche Erfindung wird nachfolgend anhand einer Fügevorrichtung 1 näher erläutert, die insbesondere zum Metall-Schutzgasschweißen (MSG-Schweißen) eingesetzt werden kann. Unter das MSG-Schweißen fallen insbesondere die bekannten Methoden des Metall-Inertgasschweißens (MIG-Schweißen) und des Metall-Aktivgasschweißens (MAG-Schweißen), die beispielsweise mit Kurzlichtbogen ausgeführt werden können. Die gegenständlich betrachtete Fügevorrichtung 1 kann auch zum Lichtbogenlöten eingesetzt werden.

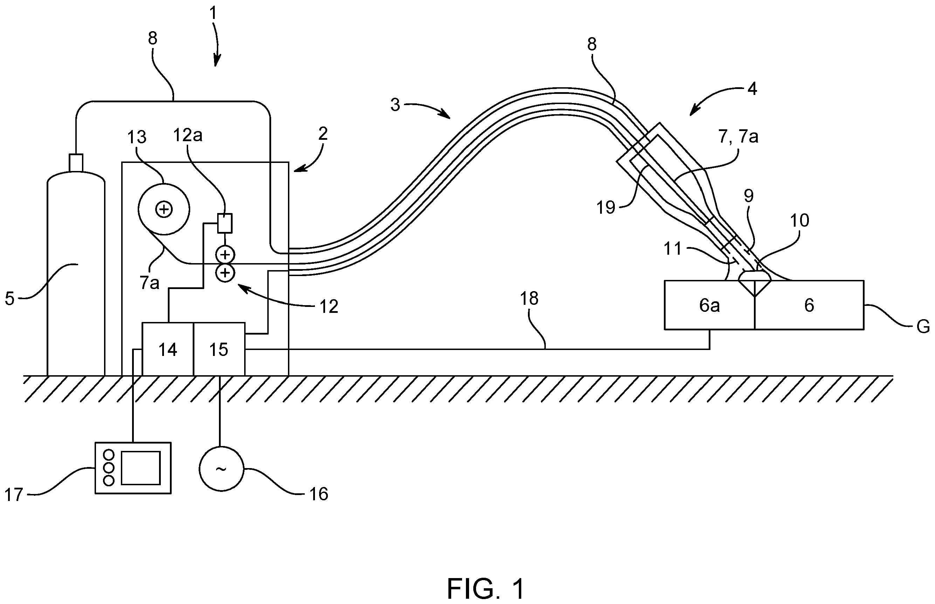

Wie nachfolgend im Detail erläutert wird, ist es zur Durchführung von Lötvorgängen auf einer Fügevorrichtung 1 lediglich erforderlich, ein zum Löten geeignetes Schutzgas SG sowie ein zum Löten geeignetes Lot als Zusatzwerkstoff, d.h. als abschmelzende Fügelektrode 7, zu verwenden. Ansonsten sind im Vergleich zur Durchführung eines Schweißvorganges an der Fügevorrichtung 1 keine Änderungen, z.B. Änderungen am Brenner 4 usw., erforderlich, sodass sich insbesondere die Steuerung einer wie in Fig.1 gezeigten Fügevorrichtung 1 beim Löten und Schweißen nicht unterscheidet. Die gegenständliche Erfindung kann dementsprechend auch im Rahmen eines Lötens, das auf der Fügevorrichtung 1 gemäß Fig.1 durchgeführt wird, eingesetzt werden, sodass die nachfolgenden Ausführungen, mutatis mutandis, sowohl für Schweißen als auch für das Löten gelten. Um diesen Umstand zu unterstreichen, wird nachfolgend auf die allgemeinen Begriffe Fügestrom I, Fügespannung U, Fügeelektrode 7, etc. zurückgegriffen, anstelle der ansonsten beim Schweißen üblichen Bezeichnungen Schweißstrom I, Schweißspannung U, Schweißelektrode 7, Schweißdraht 7a, etc., bzw. anstelle der ansonsten beim Löten üblichen Bezeichnungen Lötstrom I, Lötspannung U, Lötelektrode 7, etc.

Die Fügevorrichtung 1 weist eine Stromquelle 2, ein Schlauchpaket 3, einen Brenner 4 und einen Schutzgasbehälter 5 mit einem Schutzgas SG auf. Der Schutzgasbehälter 5 ist mittels einer Schutzgasleitung 8 mit dem Brenner 4 verbunden. Am Schutzgasbehälter 5 oder in der Schutzgasleitung 8 kann ein nicht dargestellter Druckregler, beispielsweise in Form einer bekannten Flaschenarmatur, vorgesehen sein, der in der Regel dazu dient, den Durchfluss des Schutzgases SG zu regeln. Je nach Material des Grundstoffs G werden entweder reaktionsarme inerte Schutzgase SGi, wie beispielsweise Argon (Ar) oder Helium (He), verwendet oder es werden aktive Schutzgase SGa wie z.B. Sauerstoff (O) oder Kohlendioxid ($CO_2$) verwendet. Zum MSG-Löten werden als Schutzgas SG üblicherweise Gemische aus Argon oder Kohlendioxid verwendet.

In der Stromquelle 2 kann eine Fügeelektrode 7 in Form einer Drahtelektrode 7a angeordnet sein, der üblicherweise auf einer Fügedraht-Rolle 13 aufgewickelt ist. Zum Abwickeln des Fügedrahtes 7a und insbesondere zum Zuführen des Fügedrahtes 7a zu einer Fügestelle, d.h. beim Schweißen an einer Schweißstelle und beim Löten an einer Lötstelle, ist eine Vorschubeinheit 12 angeordnet, die von einer Vorschub-Antriebseinheit 12a angetrieben wird.

Um auf der Fügevorrichtung 1 zu löten, kann anstelle eines Fügedrahtes 7a ein Hartlot, wie ein Silberlot oder ein Messinglot oder ein Kupferbasislot, eingesetzt werden, das ebenso von einer Fügedraht-Rolle 13 abgerollt werden kann. Einer Fachperson auf dem Gebiet der Fügetechnik sind diese Zusammenhänge hinlänglich bekannt.

Der Fügedraht 7a auf der Fügedraht-Rolle 13, und auch die Vorschubeinheit 12, können aber auch außerhalb der Stromquelle 2 in einer davon getrennten Einheit angeordnet sein. Bekanntermaßen existieren auch Ausführungsformen von Schweißvorrichtungen 1 mit mehreren Vorschubeinheiten 12, die in einer vorteilhaften Weise aufeinander abgestimmt den benötigten Drahtvorschub herbeiführen. Eine Vorschubeinheit 12 kann aber ebenso im Bereich des Brenners 4 angeordnet sein. Für die Anwendbarkeit der gegenständlichen Erfindung ergeben sich daraus keine Einschränkungen.

Die Vorschub-Antriebseinheit 12a wird von einer Steuereinheit 14 angesteuert, welche wiederum in der Regel mit einer Benutzerschnittstelle 17 kommuniziert. Über eine Benutzerschnittstelle 17 können von einem Benutzer bedarfsweise bestimmte Fügeparameter vorgegeben werden, wie z.B. eine Fügespannung U, ein Fügestrom I, eine Drahtvorschubgeschwindigkeit vd, mit der der Fügedraht 7a zur Fügestelle vorgeschoben wird, etc. Es können beispielsweise auch vordefinierte Programme mit bestimmten voreingestellten Fügeparametern in der Steuereinheit 14 hinterlegt sein, welche vom Benutzer über die Benutzerschnittstelle 17, oder auch von einer übergeordneten Steuerung, wie einer Steuerung eines Schweißroboters, ausgewählt werden können.

In der Stromquelle 2 ist weiters ein Leistungsteil 15 angeordnet, das von der Steuereinheit 14 gesteuert (oder geregelt) wird und das an eine externe Spannungsversorgung 16 angeschlossen ist. Die Steuereinheit 14 kann demzufolge ausgestattet sein, die gesamte Fügevorrichtung 1 oder bestimmte Komponenten der Fügevorrichtung 1, wie die Vorschubeinheit 12, die Steuerung der Schutzgasförderung und/oder das Leistungsteil 15 und/oder die Bewegung des Brenners 4, zu steuern und/oder zu regeln. Eine Steuereinheit 14 kann in Form von mikroprozessorbasierter Hardware, eines Mikrocontrollers, oder einer integrierten Schaltung (ASIC, FPGA) implementiert werden, und kann natürlich auch außerhalb der Stromquelle 2 angeordnet werden.

Das Leistungsteil 15 der Stromquelle 2 stellt den benötigten Fügestrom I und die benötigte Fügespannung U über eine im Schlauchpaket 3 angeordnete Stromleitung 19 zur Verfügung. Die Fügespannung U wird zum Schweißen an die Fügeelektrode 7 angelegt, sodass beim Brennen eines Lichtbogens der Fügestrom I und während des Kurzschlusses ein Kurzschlussstrom IK fließt. Daneben werden dem Brenner 4 über das Schlauchpaket 3 üblicherweise auch der Fügedraht 7a (mittels der Vorschubeinheit 12) und das Schutzgas SG, und gegebenenfalls auch ein Kühlmedium zum Kühlen des Brenners 4, zugeführt. Im Schlauchpaket können darüber hinaus auch Steuerleitungen vorgesehen sein. Es können aber als Schlauchpaket 3 mehrere einzelne Leitungen für die jeweiligen Medien, Steuerungen und Energien vorgesehen sein.

Um einen Schweiß- oder Lötprozess durchzuführen, wird einem Werkstück 6 aus einem Grundstoff G mittels einer elektrischen Verbindung 18 ein erstes elektrisches Potential angelegt, und an den Fügedraht 7a als Fügeelektrode 7 wird ein zweites elektrisches Potential angelegt, wodurch nach Zünden eines Lichtbogens 11 in Lichtbogenphasen LP zwischen Fügedraht 7a und dem Werkstück 6 ein Fügestrom I fließt und in Kurzschlussphasen KP ein Kurzschlussstrom IK fließt.

Beim Fügen auf einer Fügevorrichtung 1 gemäß Fig.1 können verschiedene Lichtbogenarten zum Einsatz kommen, wie Kurzlichtbogen oder Übergangslichtbogen oder Sprühlichtbogen oder Impulslichtbogen, die einer Fachperson auf dem Gebiet der Fügetechnik hinlänglich bekannt sind. Konkret beim Schweißen werden mittels des Lichtbogens 11 der Fügedraht 7a an dem dem Werkstück 6 zugewandten Ende und ein Bereich des Grundwerkstoffs G aufgeschmolzen. Im dargestellten Beispiel wird eine Schweißnaht 10 auf das Werkstück 6 aufgeschweißt, man spricht vom sogenannten Auftragsschweißen. Es könnten aber auch zwei Werkstücke 6, 6a verbunden werden, wie durch die gestrichelte Linie symbolisiert ist, man spricht dann vom sogenannten Verbindungsschweißen. Der Lichtbogen 11 wird von dem aus dem Brenner 4 ausströmenden Schutzgas SG in Form einer Schutzgasglocke 9 umströmt, um das geschmolzene Material im Bereich der Schweißnaht 10 von der Umgebung abzuschirmen.

Der Fügedraht 7a, also die abschmelzende Fügeelektrode 7, wird der Fügestelle mit einer bestimmten Drahtvorschubgeschwindigkeit $v_d$ zugeführt, welche von mehreren Einflussgrö-ßen abhängig sein kann. Beim manuellen Schweißen, bei dem der Brenner 4 von einer Person per Hand geführt wird, wird in der Regel eine zumindest näherungsweise konstante Drahtvorschubgeschwindigkeit $v_d$ beispielsweise in Abhängigkeit des eingestellten Fügestroms I gewählt. Bei automatisierten Schweißvorgängen, beispielsweise wenn der Brenner 4 von einem Schweißroboter geführt wird, kann die Drahtvorschubgeschwindigkeit $v_d$ z.B. zusätzlich in Abhängigkeit einer Schweißgeschwindigkeit $v_s$ gewählt werden, mit welcher der Brenner 4 relativ zum Werkstück 6 bewegt wird. Bekanntermaßen können Geschwindigkeiten wie $v_d$ und $v_s$ auch beim manuellen Fügen angepasst werden.

Mit der in Fig.1 dargestellten Fügevorrichtungen können wie erwähnt unterschiedliche Lichtbogenarten realisiert werden, insbesondere Kurzlichtbogen. Wie eingangs erläutert, weisen auf Kurzschlüssen basierende Lichtbogenfügeverfahren zwei grundlegende zeitliche Phasen auf, Lichtbogenphasen LP und Kurzschlussphasen KP. Lichtbogenphasen LP und Kurzschlussphasen KP wechseln sich typischerweise zyklisch ab, wobei eine Lichtbogenphase LP meist unmittelbar auf eine Kurzschlussphase KP folgt, und umgekehrt eine Kurzschlussphase KP unmittelbar auf eine Lichtbogenphase KP folgt.

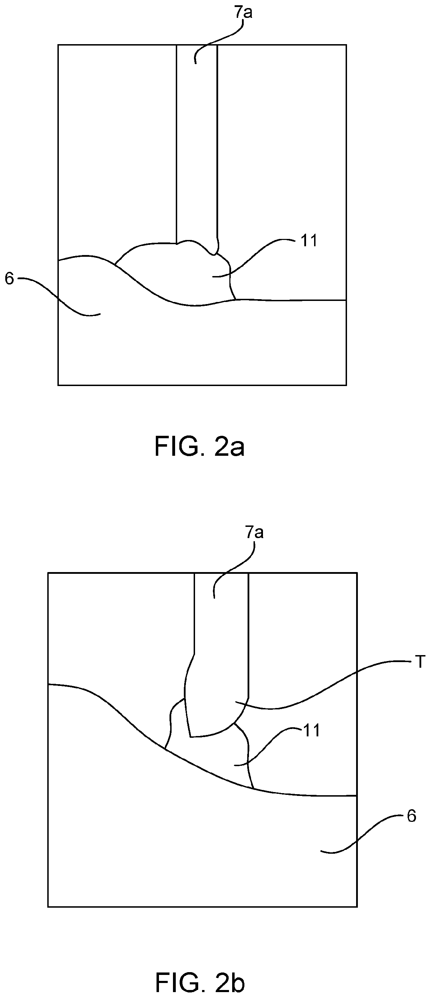

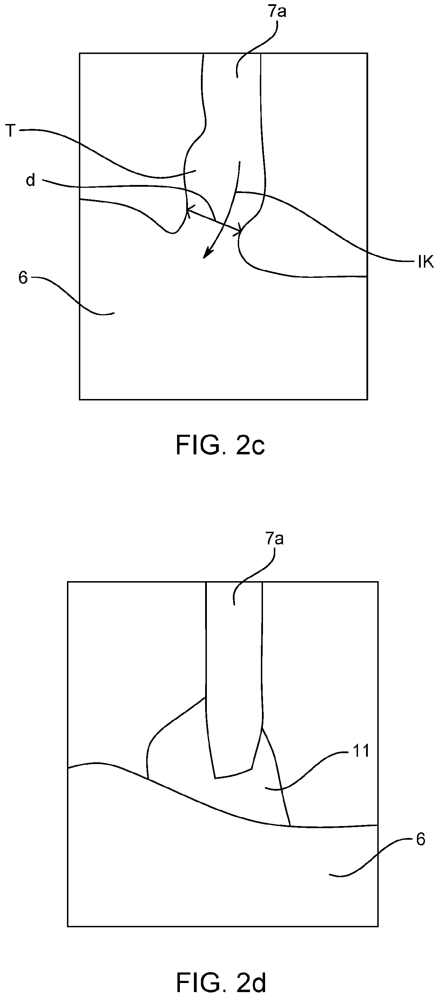

Wie in den Figuren 2a-d anhand eines Ablaufs eines realen Kurzlichtbogen-Fügeverfahrens gezeigt ist (die Grundlage der Figuren 2a-d sind mittels einer Highspeed-Kamera aufgenommene Bilder eines realen Kurzlichtbogen-Fügeverfahrens), wird bei Lichtbogenfügeverfahren mit abschmelzender Drahtelektrode 7a zu Beginn einer Lichtbogenphase LP zunächst ein Lichtbogen 11 gezündet (Fig.2a), die Drahtelektrode 7a in der Lichtbogenphase LP aufgeschmolzen (Fig.2b), sodass sich ein während des Aufschmelzens wachsender Schweißtropfen T bildet, und der Schweißtropfen T an das zu fügendes Werkstück 6 herangeführt, bis der Schweißtropfen T das Werkstück 6 berührt. Der Lichtbogen 11 erlischt in weiterer Folge und eine Kurzschlussphase KP beginnt. Infolge der Berührung des Werkstücks 6 durch den Schweißtropfen T bildet sich ein Kurzschluss zwischen der Drahtelektrode 7a und dem Werkstück 6 (Fig.2c). Durch den Schweißtropfen T fließt dann ein Kurzschlussstrom IK, der die Drahtelektrode 7a und folglich den Schweißtropfen T weiter erwärmt. Durch die fortwährende Erwärmung wird der Schweißtropfen im Bereich des Übergangs zum nicht geschmolzenen Teil der Drahtelektrode eingeschnürt, d.h. es kommt zu einer fortlaufenden Verringerung des Querschnitts d des Schweißtropfens T. Ist der Querschnitt d des Schweißtropfens T an zumindest einer Stelle so gering, dass der Schweißtropfen T nicht mehr an der Drahtelektrode 7a gehalten werden kann, so löst sich der Schweißtropfen T von der Drahtelektrode 7a ab und geht in ein Schmelzbad am Werkstück 6 über, wonach es zu einer Lücke zwischen Drahtelektrode 7a und Werkstück 6 kommt, und ein neuer Lichtbogen 11 zündet (Fig.2d).

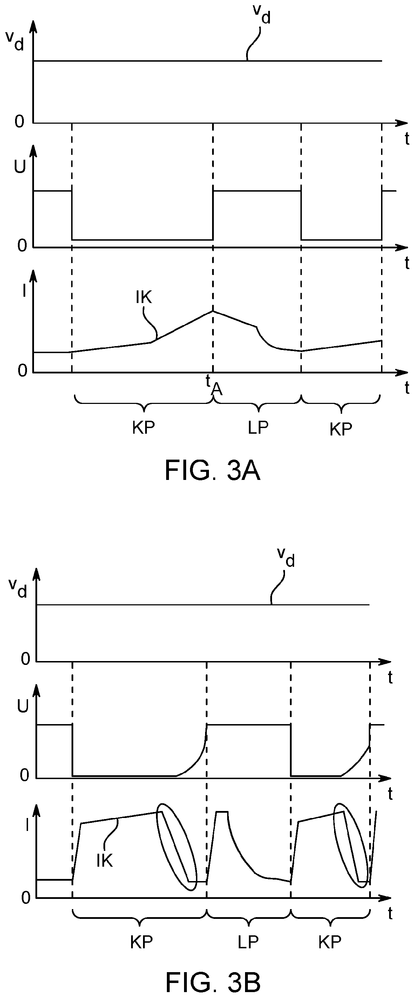

Wie sich aus den vorstehenden Ausführungen ergibt, sind die Fügespannung U, der Fügestrom I und die Drahtvorschubgeschwindigkeit $v_d$ wesentliche Fügeparameter im Zuge eines Kurzlichtbogenprozesses. Wie zeitliche Verläufe dieser Fügeparameter konkret ausgestaltet werden können, ist in den Figuren 3a-c anhand dreier in der Praxis etablierter Methoden zum Kurzschlussbehandlung gezeigt.

Fig.3a zeigt die in der Praxis übliche Vorgehensweise, bei der der Kurzschlussstrom IK in den Kurzschlussphasen KP kontinuierlich erhöht wird, z.B. linear, exponentiell, quadratisch, oder auch stufenweise, um ein zügiges Erwärmen und ferner Abschmelzen und damit Ablösen von Schweißtropfen T sicherzustellen. Ein Vorteil dieser Vorgehensweise ist, dass weitgehend auf aufwendige Sensorik, Aktorik und Regelungstechnik verzichtet werden kann. Ein wesentlicher Nachteil dieser Variante ist jedoch, dass der Kurzschlussstrom IK bei Kurzschlussaufbruch, im gezeigten Fall zum eingezeichneten Zeitpunkt $t_A$, hoch ist, wodurch mitunter signifikante Schweißspritzer entstehen.

Fig.3b zeigt eine ebenso verbreitete Form der Kurzschlussbehandlung, bei der der Zeitverlauf des elektrischen Widerstandes der Kurzschlussbrücke überwacht wird. Da der Kurzschlussstrom IK in den meisten praktisch relevanten Fällen bekannt ist, kann bei zusätzlicher Kenntnis der über den Schweißtropfen T abfallenden Spannung einfach auf den Widerstand geschlossen werden, z.B. durch Auswertung des ohmschen Gesetztes R = U/I. Wie eingangs erläutert, steht der Widerstand eines Schweißtropfens T in Zusammenhang mit der Gestalt des Schweißtropfens T und dessen Einschnürung, sodass alleine auf Basis des Widerstandsverlaufes erkannt werden kann, wann in unmittelbarer zeitlicher Nähe ein Kurschlussaufbruch zu erwarten ist. Bei Detektion einer fortschreitenden Tropfeneinschnürung kann der Kurzschlussstrom IK reduziert werden, wie in Fig.3b in den mit Kreisen hervorgehobenen Abschnitten ersichtlich ist, sodass geringere Schweißspritzer entstehen und die Prozessstabilität erhöht wird. Ein Nachteil dieser Variante ist, dass zumindest die Fügespannung U und der Fügestrom I mit hoher Präzision hochaufgelöst gemessen werden müssen, um aussagekräftige Widerstandswerte ermitteln zu können. Es ist ersichtlich, dass im Umfeld eines Schweißprozesses vielfältige Störungen auf dazu vorgesehene Messtechnik wirken können, wie elektromagnetische Einstreuungen, Messrauschen, Temperatureinwirkungen, etc., was eine hochwertige Messung erschwert. Bei der aus dem Stand der Technik bekannten Methode des RL-Abgleichs, mit der Einflüsse z.B. eines Schlauchpakets und/oder Massekabels auf Messergebnisse kompensiert werden können, sind genaue, modellhafte Beschreibungen von Schlauchpaket und Massekabel unumgänglich.

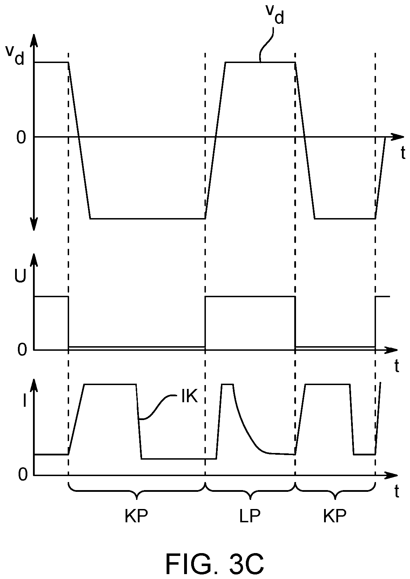

In der in Fig.3c gezeigten Vorgehensweise wird ein aktiver Drahtrückzug vorgesehen, wie anhand des Zeitverlaufs der Drahtvorschubgeschwindigkeit vd erkennbar ist, der im Gegensatz zu den Szenarien aus Fig.3a und Fig.3b auch negative Geschwindigkeitswerte aufweist. Durch das Rückziehen des Drahtes wird die Tropfenablöse durch die Oberflächenspannung unterstützt, dadurch kann die Stromstärke während der Kurzschlussphasen KP weiter reduziert werden, was in der Folge ebenso zu geringeren Strömen IK zu Zeitpunkten des Kurzschlussaufbruchs führt. Ein Nachteil dieser Variante ist jedoch, dass aufwendige Aktuatorik vorgesehen werden muss, um den aktiven Drahtrückzug realisieren zu können.

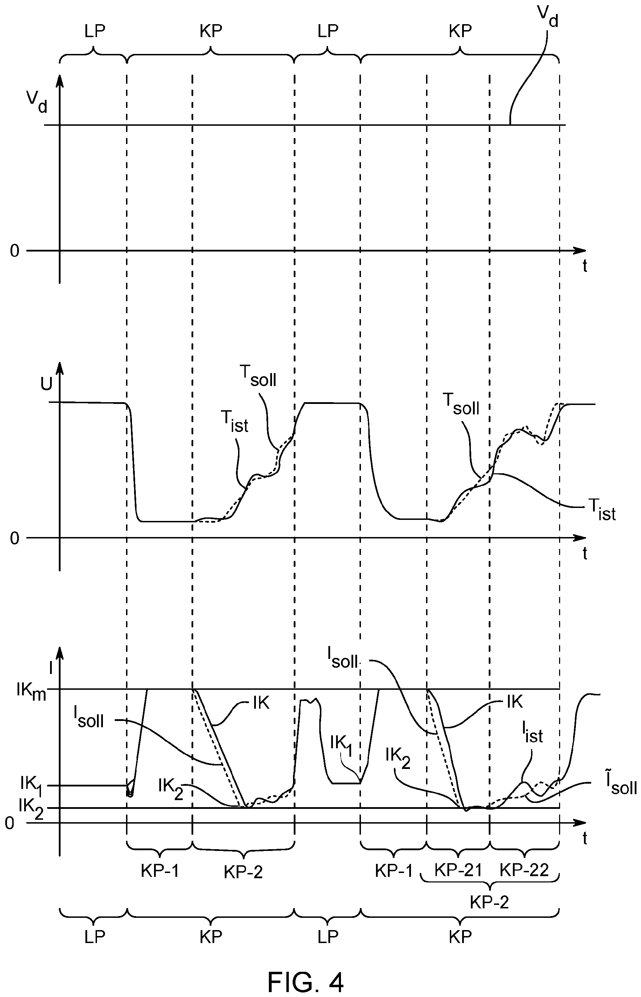

Die gegenständliche Erfindung sieht vor, die Probleme der in Figs.3a-c gezeigten Vorgehensweisen zumindest zu mindern. Dazu werden bei einem Kurzlichtbogen-Fügeverfahren gemäß den vorstehenden Ausführungen in den Kurzschlussphasen KP je ein erste Teilphase KP-1, sowie eine der ersten Teilphase KP-1 nachfolgende zweite Teilphase KP-2 vorgesehen, wie nachfolgend, insbesondere anhand von Fig.4, erläutert wird.

Die Summe der Zeitdauern einer ersten Teilphase KP-1 und einer zweiten Teilphase KP-2, die in einer gleichen Kurzschlussphase KP liegen, entspricht dabei bevorzugt der zeitlichen Länge der Kurzschlussphase KP. Das bedeutet, dass neben den Teilphasen KP-1, KP-2 vorzugsweise keine weiteren Phasen in den Kurzschlussphasen KP mehr vorhanden sind. Diese vorteilhafte Ausgestaltung hat zur Folge, dass es zum Ende der zweiten Teilphase KP-2 zu einer Tropfenablöse kommt, der Lichtbogen wieder zündet und die übergeordnete Kurzschlussphase KP gemeinsam mit der zweiten Teilphase KP-2 endet. Die Teilphasen KP-1, KP-2 können dabei gleich lang sein oder unterschiedlich lang gewählt werden. Es hat sich gezeigt, dass die zeitlichen Längen der Teilphasen KP-1, KP-2 einer Kurzschlussphase KP am besten in einem Verhältnis zwischen 0,3 und 1,7, oder zwischen 0,5 und 1,5, oder zwischen 0,75 und 1,25, oder zwischen 0,85 und 1,15 zueinanderstehen. Es sei jedoch angemerkt, dass die Erfindung in einer weiteren Ausführungsform auch in Szenarien angewendet werden kann, in denen neben der ersten Teilphase KP-1 und der zweiten Teilphase KP-2 noch weitere Teilphasen einer Kurzschlussphase KP möglich sind, z.B. vor der ersten Teilphase KP-1 oder zwischen der ersten Teilphase KP-1 und der zweiten Teilphase KP-2. Da eine Steuerung eines entsprechenden Fügevorganges bei nur zwei Teilphasen jedoch besonders einfach erfolgen kann, ist eine Unterteilung einer Kurzschlussphase KP in nur zwei Teilphasen vorteilhaft.

Erfindungsgemäß wird in der ersten Teilphase KP-1 der Kurzschlussstrom IK ausgehend von einem zu Beginn der ersten Teilphase KP-1 vorliegenden Anfangsstrom $IK_1$ auf einen vorgegeben Abschmelzstrom $IK_m$ erhöht. Der Anfangsstrom $IK_1$ kann dabei von Kurzschlussphase KP zu Kurzschlussphase KP unterschiedlich ausfallen, aufgrund verschiedenster Einflüsse, die in einer Lichtbogenphase auftreten können. Auch ist das erfindungsgemäße Erhöhen des Kurzschlussstromes IK in der ersten Teilphase KP-1 im Rahmen der gegenständlichen Erfindung nicht derart zu verstehen, dass der Kurzschlussstrom IK zwingend (streng) monoton erhöht wird. Zwar ist eine monotone Erhöhung vorteilhaft, aus unterschiedlichen Gründen kann der Kurzschlussstrom IK während seiner Erhöhung aber auch kurzfristig konstant gehalten werden oder sogar kurzfristig abgesenkt werden, z.B. zu Beginn einer ersten Teilphase KP-1 ausgehend vom Anfangsstrom $IK_1$.

In der zweiten Teilphase KP-2 wird der Kurzschlussstrom IK entsprechend einem vorgegebenen Kurzschlussstrom-Sollverlauf $I_{soll}$ reduziert, und es wird ein Tropfen-Istwert $T_{ist}$, welcher einen Istwert eines Tropfen-Parameters RT des Schweißtropfens T beschreibt, ermittelt und dazu herangezogen, den Kurzschlussstrom-Sollverlauf $I_{soll}$ zu korrigieren. Wie bereits an früherer Stelle ausgeführt, ist es besonders vorteilhaft, wenn der Tropfen-Istwert $T_{ist}$ mit einem vorgegebenen Tropfen-Sollwert $T_{soll}$ verglichen wird, vorzugsweise mittels Subtraktion des Tropfen-Istwertes $T_{ist}$ vom Tropfen-Sollwert $T_{soll}$, insbesondere um ein Tropfen-Vergleichsergebnis $e_\tau$ zu ermitteln, und die Veränderung des Kurzschlussstrom-Sollverlaufes in Abhängigkeit des Tropfen-Vergleichsergebnisses $e_\tau$ vozunehmen.

Durch die erfindungsgemäße Vorgehensweise wird eine Vielzahl von vorteilhaften Effekten realisiert. Einerseits wird durch das Vorsehen eines hohen Stromes in der ersten Teilphase KP-1 ein zügiges Erwärmen bzw. Erhitzen des Schweißtropfens sichergestellt. Dieser hohe Kurzschlussstrom IK wird jedoch nicht über die gesamte Kurzschlussphase KP aufrechterhalten. Andererseits wird es möglich, einen präzise an die Gegebenheiten einer spezifischen Fügeaufgabe angepassten Zeitverlauf zur erneuten Reduktion des Kurzschlussstromes vorzugeben, um am Ende der Kurzschlussphase einen nur noch geringen Kurzschlussstrom vorzufinden, der zu geringen Schweißspritzern führt. Um einen geeigneten Kurzschlussstrom-Sollverlauf zum Reduzieren des Kurzschlussstromes vorgeben zu können, auf den der Kurzschlussstrom IK eingeregelt oder eingestellt wird, kann eine Reihe von Einflussgrößen berücksichtigt werden, wie eine zu erwartende oder vorgegebene oder optimierte Dauer einer Kurzschlussphase KP und/oder eine zu erwartende oder vorgegebene oder optimierte Temperaturverteilung im Werkstück 6 oder in der Drahtelektrode 7a und/oder ein zu erwartender oder vorgegebener oder optimierter Zeitverlauf der Vorschubgeschwindigkeit vd usw. Wie nachfolgend im Detail erläutert wird, können zu diesem Zweck insbesondere numerische Simulationen eingesetzt werden.

Darüber hinaus erlaubt es die Erfindung, zusätzlich eine Überwachung der Form und Geometrie des Schweißtropfens T vorzusehen. Es können folglich geometrische Parameter des Schweißtropfens T, z.B. ein Durchmesser oder ein Umfang oder eine Einschnürung, als Tropfen-Parameter RT angesetzt werden, es können aber auch elektrische Parameter, wie ein elektrischer Widerstand oder ein elektrischer Leitwert oder eine Impedanz oder eine Admittanz oder eine Spannung oder eine Leistung als Tropfen-Parameter RT angesetzt werden. Da die erfindungsgemäße Kurzschlussbehandlung nicht ausschließlich auf einer (messtechnisch aufwendigen) Überwachung des Schweißtropfens T basiert, sondern die Überwachung des Schweißtropfens T lediglich additiv zur Vorgabe des Kurzschlussstrom-Sollverlaufs erfolgt, kann die Überwachung des Tropfen-Istwertes vereinfacht erfolgen, und insbesondere lediglich in einem kurzen zeitlichen Abschnitt innerhalb der zweiten Teilphase KP-2. Im Vergleich zu den vorstehend anhand von Fig.3 diskutierten Ansätzen wird durch die Erfindung eine zumindest ebenbürtige Reduktion von Schweißspritzern erreicht, obwohl auf aufwendige Aktoren zur Realisierung eines Drahtrückzuges sowie auf empfindliche Messtechnik verzichtet werden kann. Insbesondere erlaubt es die Erfindung, beispielsweise lediglich eine direkt am Leistungsteil 15 in der Stromquelle 2 abfallende Spannung zur Überwachung des Schweißtropfens T zu messen, dennoch aber zufriedenstellende Ergebnisse zu erreichen. Im Stand der Technik muss aufwendig die direkt am Schweißtropfen T abfallende Spannung gemessen oder errechnet werden. Die Erfindung erlaubt es demnach, eine elektrische Ist-Spannung U, die lediglich teilweise über dem Schweißtropfen T abfällt, als Tropfen-Istwert $T_{ist}$ zu ermitteln, und eine elektrische Soll-Spannung als Tropfen-Sollwert $T_{soll}$ vorzugeben, oder aus der elektrischen Ist-Spannung U und dem Kurzschlussstrom IK einen elektrischer Ist-Widerstand RT als Tropfen-Istwert $T_{ist}$ zu ermitteln und einen elektrischen Soll-Widerstand als Tropfen-Sollwert $T_{soll}$ vorzugeben, und bereits

so eine effektive Reduktion von Schweißspritzern sicherzustellen.

Natürlich ist es aber auch im Rahmen der gegenständlichen Erfindung denkbar, Erweiterungen, wie vorstehend beschrieben, vorzusehen, und z.B. aus einer am Leistungsteil 15 in der Stromquelle 2 gemessenen Spannung auf eine am Schweißtropfen T abfallende Spannung zu rechnen, und eine solche Spannung zur Beurteilung des Schweißtropfens T und der Einschnürung heranzuziehen. Dazu können Methoden zur Kompensation von Widerständen und Induktivitäten in der elektrischen Verbindung zwischen Leistungsteil 15 und Schweißtropfen T eigesetzt werden ("RL-Kompensation"). Erforderlich ist das aber nicht. In gleicher Weise ist denkbar, die Erfindung mit der in Fig.3c gezeigten Kurschlussbehandlung zu kombinieren, also einen aktiven Drahtrückzug vorzusehen, vorzugsweise während des gesamten Kurzschlusses, und die Fügeelektrode 7 während der zweiten Teilphase KP-2 vom Werkstück 6 wegzubewegen. Auch diesbezüglich gilt, dass durch die Erfindung auch ohne eine solche Zusatzmaßnahme zufriedenstellende Ergebnisse erreicht werden können.

Mögliche Verläufe, die im Rahmen einer erfindungsgemäßen Vorgehensweise auftreten können, sind in Fig.4 dargestellt. Es ist erkennbar, dass der Abschmelzstrom $IK_m$ über dem Anfangsstrom $IK_1$ liegt. Dadurch wird ein effizientes Erwärmen und letztlich Abschmelzen des Schweißtropfens T erreicht. In diesem Zusammenhang wurde erkannt, dass insbesondere dann gute Resultate erzielt werden, wenn der Abschmelzstrom $IK_m$ um mehr als ein 0,5-Faches des Anfangsstromes $IK_1$ über dem Anfangsstrom $IK_1$ liegt, oder um mehr als ein 1-Faches oder um mehr als ein 5-Faches oder um mehr als ein 10-Faches des Anfangsstromes $IK_1$ über dem Anfangsstrom $IK_1$ liegt. Wie bereits an früherer Stelle erwähnt, kann insbesondere der Stromverlauf zu Beginn einer Kurzschlussphase KP von Kurzschlussphase KP zu Kurzschlussphase KP variieren, wie in Fig.4 mittels der links der ersten Kurzschlussphase KP-1 vorgesehenen, strichlierten Verläufe angedeutet ist.

Wie ebenso in Fig.4 ersichtlich ist, verbindet der Kurzschlussstrom-Sollverlauf $I_{soll}$ im gezeigten Fall den Abschmelzstrom $IK_m$ stets mit einem unter dem Abschmelzstrom $IK_m$ liegenden Endstrom $IK_2$. Auch das ist nicht zwingend, sodass auch veränderliche Endströme IK2 vorgesehen werden können. Unabhängig davon, ob ein gleichbleibender oder ein sich ändernder Endstrom $IK_2$ vorgesehen wird, erweist es sich in der Praxis als günstig, den Endstrom $IK_2$ zwischen 20 und 200 A zu wählen, oder zwischen 20A und 150A, oder zwischen 30A und 130A oder zwischen 40A und 120A oder zwischen 50A und 110A zu wählen. Auf diese Weise wird ein geringer Kurzschlussstrom IK zu Ende der Kurzschlussphasen KP sichergestellt.

Um die erfindungsgemäße Anpassung, d.h. die Korrektur, des Kurzschlussstrom-Sollverlaufes $I_{soll}$ robust gegenüber Störungen zu gestalten, kann vorgesehen werden, dass es nur dann zu einer Veränderung des Kurzschlussstrom-Sollverlaufs $I_{soll}$ kommt, wenn das Vergleichsergebnis $e_\tau$ oder allgemein eine Abweichung zwischen dem Tropfen-Istwert $T_{ist}$ und dem Tropfen-Sollwert $T_{soll}$ eine vorgegebene Schwelle überschreitet. Konkret kann der Kurzschlussstrom-Sollverlaufs $I_{soll}$ zu diesem Zweck verringert werden, wenn der Tropfen-Istwert $T_{ist}$ über dem vorgegebenen Tropfen-Sollwert $T_{soll}$ liegt, vorzugsweise wenn der Tropfen-Istwert $T_{ist}$ um mehr als eine vorgegebene Abweichungsschwelle über dem vorgegebenen Tropfen-Sollwert $T_{soll}$ liegt, welche Abweichungsschwelle beispielsweise 5% oder 10% oder 20% oder 50% des Tropfen-Sollwertes $T_{soll}$ betragen kann, und dass der Kurzschlussstrom-Sollverlauf $I_{soll}$ erhöht wird, wenn der Tropfen-Istwert $T_{ist}$ unter dem vorgegebenen Tropfen-Sollwert $T_{soll}$ liegt, vorzugsweise wenn der Tropfen-Istwert $T_{ist}$ um mehr als eine vorgegebene Abweichungsschwelle unter dem vorgegebenen Tropfen-Sollwert $T_{soll}$ liegt, welche Abweichungsschwelle ebenso 5% oder 10% oder 20% oder 50% des Tropfen-Sollwertes $T_{soll}$ betragen kann. Je nach betrachtetem Tropfen-Parameter RT kann aber auch eine umgekehrte Vorgehensweise erforderlich sein. So entspricht die Vorgehensweise bei Betrachtung eines elektrischen Widerstandes der vorstehenden Beschreibung, da der Kurzschlussstrom IK verringert werden muss, wenn der Widerstand zu groß ist. Wird hingegen ein Durchmesser der Einschnürung des Tropfens betrachtet, gilt es, einen Kurzschlussstrom zu erhöhen, wenn der Durchmesser zu groß ist, um das Abschmelzen zu beschleunigen und den Durchmesser auf den vorgegebenen Soll-Durchmesser zu reduzieren.

Bei der praktischen Umsetzung der Erfindung hat sich als vorteilhaft erwiesen, in den zweiten Teilphasen KP-2 jeweils eine erste Subphase KP-21 und eine der ersten Subphase KP-21 nachfolgende zweite Subphase KP-22 vorzusehen, und in der ersten Subphase KP-21 keine Korrektur des Kurzschlussstrom-Sollverlauf $I_{soll}$ vorzusehen, sondern lediglich in der zweiten Subphase KP-22. Die erste Subphase KP-21 kann dabei in einer vorteilhaften Weise zumindest so lange gewählt werden, wie die zweite Subphase KP-22, sodass sich die erste Subphase KP-21 über zumindest die Hälfte einer zweiten Teilphase KP-2 erstreckt. Auf diese Weise wird erreicht, dass aufwendige Messungen und/oder Berechnungen auf einen kleinen Teil der zweiten Teilphase KP-2 beschränkt sind (auf die zweite Subphase KP-22), was im Vergleich zu bekannten Verfahren Komplexität reduziert und Rechen-Ressourcen schont.

Wie an früherer Stelle erwähnt, ist es im Rahmen der Erfindung möglich, den Kurzschlussstrom-Sollverlauf $I_{soll}$ mittels numerischer Simulation des Kurzlichtbogen-Fügeverfahrens zu ermitteln. Auf diese Weise kann mittels hochpräziser Modelle des Schweißprozesses eine Vorabsimulation durchgeführt werden und mittels Optimierung ein geeigneter Kurzschlussstrom-Sollverlauf $I_{soll}$ bestimmt werden, der mithilfe von Online-Simulationen im Zuge des Fügens weiter angepasst und verbessert wird. Auf diese Weise kann insbesondere auf sich ändernde Randbedingungen während des Fügens Rücksicht genommen werden.

Die Erfindung erlaubt somit im Rahmen einer besonders vorteilhaften Ausführung, auf Basis eines simulatorisch oder auch empirisch ermittelten Kurzschlussstrom-Sollverlaufs, welcher beispielsweise in Form einer Matrix oder in einer Datenbank gespeichert ist, ein gewünschtes Fügeverhalten im Vorhinein festzulegen und in Form des Kurzschlussstrom-Sollverlaufes zum Ausdruck zu bringen. Im Zuge einer empirischen oder simulatorischen Festlegung von Parametern, d.h. insbesondere im Zuge einer Festlegung eines Sollverlaufes für den Kurzschlussstrom IK in der zweiten Teilphase KP-2 der Kurzschlussphasen KP, kann ein optimales Verhältnis zwischen Kurzschlussstrom IK und Kurzschlussdauer, d.h. zeitliche Länge der Kurzschlussphasen KP, ermittelt werden. Die Steuerung des Kurzschlussstromes IK kann hierbei so gestaltet werden, dass zunächst rein auf Basis des vorgegebenen zeitlichen Verlaufs der Kurzschlussstrom IK gesteuert und reduziert wird, um beim Kurzschlussaufbruch einen geringen Strom sicherzustellen. Da ein MIG/MAG Schweißprozess aber sehr dynamisch ist und mitunter nicht deterministisch abläuft, sodass Abweichungen und Änderungen von Randbedingung, z.B. der Umgebungstemperatur, der Werkstückoberfläche, der Materialbeschaffenheit, usw., oftmals auftreten, erlaubt die Erfindung, zusätzlich eine Überwachung vorzusehen.

Wie vorstehend erläutert, wird erfindungsgemäß während der zweiten Teilphase KP-2 ein Widerstandsverlauf / Spannungsverlauf getrackt. Die Grundlage dafür ist, dass in der zweiten Teilphase KP-2 mit reduziertem Kurzschlussstrom ein steigender Widerstandsverlauf vorteilhaft ist für einen stabilen Schweißprozess. Ist dies nicht der Fall, wird der Kurzschlussstrom IK erhöht, sodass mehr thermische Belastung auf den Fügedraht wirkt. Die Stromerhöhung kann beispielsweise auch so ausgeführt werden, dass nur stufenweise der Strom erhöht wird und nach Verstreichen einer vorgegebenen Zeit eine neue Berechnung/ Beobachtung des Widerstandverlaufes erfolgt.

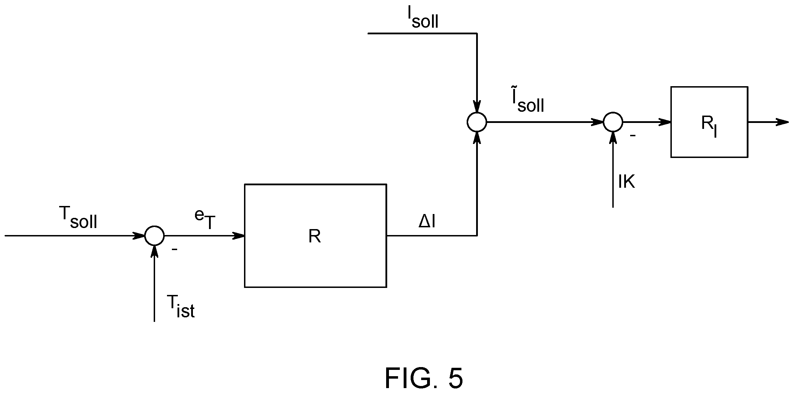

Wie abschließend in Fig.5 gezeigt ist, kann zur Umsetzung der Erfindung in einer vorteilhaften Weise auch ein Regelgesetz R vorgegeben werden, beispielsweise in Form eines PID-Regelgesetzes oder eines Sliding-Mode-Regelgesetzes oder eines MPC-Regelgesetzes oder eines Backstepping-Regelgesetzes oder ein flachheitsbasierten Regelgesetzes, mit dem ein Korrektursignal $\Delta I$ des Kurzschlussstrom-Sollverlaufs $I_{soll}$ in Abhängigkeit des Tropfen-Vergleichsergebnisses $e_\tau$ ermittelt wird, welches, wie in Fig.5 gezeigt, zum Kurzschlussstrom-Sollverlauf $I_{soll}$ addiert werden kann. Auf diese Weise wird es möglich, ein Regelgesetz und damit die Art und Weise, wie der Kurzschlussstrom-Sollverlauf $I_{soll}$ verändert wird, präzise auf die Anforderungen einer konkreten Fügeaufgabe abzustimmen. Ein auf diese Weise geänderter Kurzschlussstrom-Sollverlauf $I_{soll}$

kann in weiterer Folge zu einer üblichen Stromregelung herangezogen werden.

Auch die Bildung der Tropfen-Sollwerte $T_{soll}$ kann flexibel gestaltet werden. Insbesondere kann in der ersten Teilphase KP-1, vorzugsweise in einer Konstantstromphase oder einer Konstantspannungsphase der ersten Teilphase KP-1, in welcher der Kurzschlussstrom IK dem Abschmelzstrom $IK_m$ entspricht, ein erster Tropfen-Istwert $T_{ist}$, vorzugsweise in Form eines elektrischen Widerstandes, ermittelt werden und dieser erste Tropfen-Istwert $T_{ist}$ in der zweiten Teilphase KP-2 als erster Tropfen-Sollwert $T_{soll}$ vorgegeben werden. Wie erwähnt, werden die zweiten Teilphasen in einer vorteilhaften Weise derart gestaltet, dass es zu deren Ende zu einer Tropfenablöse und damit auch zu einem Ende der übergeordneten Kurzschlussphase KP kommt.

**Patentansprüche**

1. Kurzlichtbogen-Fügeverfahren zum Erzeugen einer Fügenaht (10) auf einem Werkstück (6), aufweisend Lichtbogenphasen (LP), in denen zwischen einer abschmelzenden Fügeelektrode (7) und einem Werkstück (6) ein Lichtbogen (11) brennt, welcher die Fügeelektrode (7) in einem dem Werkstück (6) zugewandten Endbereich der Fügeelektrode (7) unter Ausbildung eines Schweißtropfens aufschmilzt, und sich mit den Lichtbogenphasen (LP) zyklisch abwechselnde Kurzschlussphasen (KP), in denen die Fügeelektrode (7) das Werkstück (6) berührt und ein Kurzschlussstrom (IK) zum Abschmelzen des Schweißtropfens (T) durch den Schweißtropfen (T) in das Werkstück (6) fließt, **dadurch gekennzeichnet, dass** in den Kurzschlussphasen (KP) jeweils vorgesehen werden:

   - eine erste Teilphase (KP-1), in welcher der Kurzschlussstrom (IK) ausgehend von einem zu Beginn der ersten Teilphase (KP-1) vorliegenden Anfangsstrom (IK1) erhöht wird auf einen vorgegeben Abschmelzstrom ($IK_m$),
   - eine der ersten Teilphase (KP-1) nachfolgende zweite Teilphase (KP-2), in welcher

      oder Kurzschlussstrom (IK) entsprechend einem vorgegebenen Kurzschlussstrom-Sollverlauf ($I_{soll}$) reduziert wird, und
      o ein Tropfen-Istwert ($T_{ist}$) eines Tropfen-Parameters (RT) des Schweißtropfens (T) ermittelt wird und dazu herangezogen wird, den Kurzschlussstrom-Sollverlauf ($I_{soll}$) zu korrigieren.

2. Kurzlichtbogen-Fügeverfahren nach Anspruch 1, **dadurch gekennzeichnet, dass** der Tropfen-Istwert ($T_{ist}$) mit einem vorgegebenen Tropfen-Sollwert ($T_{soll}$) verglichen wird, vorzugsweise um ein Tropfen-

Vergleichsergebnis ($e_\tau$) zu ermitteln, **und dass** der Kurzschlussstrom-Sollverlauf ($I_{soll}$) zur Verringerung einer Abweichung zwischen dem Tropfen-Istwert ($T_{ist}$) und dem vorgegebenen Tropfen-Sollwert ($T_{soll}$) korrigiert wird, vorzugsweise in Abhängigkeit des Tropfen-Vergleichsergebnisses ($e_\tau$).

3. Kurzlichtbogen-Fügeverfahren nach Anspruch 1 oder 2, **dadurch gekennzeichnet, dass** der Kurzschlussstrom-Sollverlauf ($I_{soll}$) empirisch oder aus einer Datenbank oder mittels einer numerischen Simulation des Kurzlichtbogen-Fügeverfahren ermittelt wird.

4. Kurzlichtbogen-Fügeverfahren nach einem der vorhergehenden Ansprüche, **dadurch gekennzeichnet, dass** in den zweiten Teilphasen (KP-2) jeweils eine erste Subphase (KP-21) und eine der ersten Subphase (KP-21) nachfolgende zweite Subphase (KP-22) vorgesehen werden, wobei in der ersten Subphase (KP-21) keine Korrektur des Kurzschlussstrom-Sollverlaufes ($I_{soll}$) vorgesehen wird, und nur in der zweiten Subphase (KP-22) eine Korrektur des Kurzschlussstrom-Sollverlaufes ($I_{soll}$) vorgesehen wird.

5. Kurzlichtbogen-Fügeverfahren nach einem der vorhergehenden Ansprüche, **dadurch gekennzeichnet, dass** eine elektrische Ist-Spannung (U), die zumindest teilweise über dem Schweißtropfen (T) abfällt, als Tropfen-Istwert ($T_{ist}$) ermittelt wird und dass eine elektrische Soll-Spannung als Tropfen-Sollwert ($T_{soll}$) vorgegeben wird.

6. Kurzlichtbogen-Fügeverfahren nach einem der Ansprüche 1 bis 4, **dadurch gekennzeichnet, dass** eine elektrische Ist-Spannung (U), die zumindest teilweise über dem Schweißtropfen (T) abfällt, ermittelt wird, dass aus der elektrischen Ist-Spannung (U) und dem Kurzschlussstrom (IK) ein elektrischer Ist-Widerstand (RT) als Tropfen-Istwert ($T_{ist}$) ermittelt wird und dass ein elektrischer Soll-Widerstand als Tropfen-Sollwert ($T_{soll}$) vorgegeben wird.

7. Kurzlichtbogen-Fügeverfahren nach einem der vorhergehenden Ansprüche, **dadurch gekennzeichnet, dass** im Fall eines Tropfen-Istwertes ($T_{ist}$), welcher, vorzugsweise um mehr als eine vorgegebene Abweichungsschwelle, über dem vorgegebenen Tropfen-Sollwert ($T_{soll}$) liegt, der Kurzschlussstrom-Sollverlauf ($I_{soll}$) verringert oder erhöht wird, und dass im Fall eines Tropfen-Istwertes ($T_{ist}$), welcher, vorzugsweise um mehr als eine vorgegebene Kurzschlussstrom (IK), unter dem vorgegebenen Tropfen-Sollwert ($T_{soll}$) liegt, der Kurzschlussstrom-Sollverlauf ($I_{soll}$) erhöht oder verringert wird.

8. Kurzlichtbogen-Fügeverfahren nach einem der vorhergehenden Ansprüche, **dadurch gekennzeichnet, dass** in der ersten Teilphase (KP-1), vorzugsweise in einer Konstantstromphase oder in einer Konstantspannungsphase der ersten Teilphase (KP-1), in welcher der Kurzschlussstrom (IK) dem Abschmelzstrom ($IK_m$) entspricht, ein erster Tropfen-Istwert ($T_{ist}$) ermittelt wird und der erste Tropfen-Istwert ($T_{ist}$) in der zweiten Teilphase (KP-2) bei der Bestimmung des Tropfen-Sollwertes ($T_{soll}$) berücksichtigt wird.

9. Kurzlichtbogen-Fügeverfahren nach einem der vorhergehenden Ansprüche, **dadurch gekennzeichnet, dass** der Abschmelzstrom ($IK_m$) um mehr als ein 0,5-Faches über dem Anfangsstrom ($IK_1$) liegt, oder vorzugsweise um mehr als ein 1-Faches oder um mehr als ein 5-Faches oder um mehr als ein 10-Faches über dem Anfangsstrom ($IK_1$) liegt.

10. Kurzlichtbogen-Fügeverfahren nach einem der vorhergehenden Ansprüche, **dadurch gekennzeichnet, dass** die Fügeelektrode (7) während der der Kurzschlussphase KP von dem Werkstück (6) wegbewegt wird um durch eine Wegbewegung der Fügeelektrode (7) ein Auflösen eines Kurzschlusses zusätzlich zu unterstützen.

11. Kurzlichtbogen-Fügeverfahren nach einem der vorhergehenden Ansprüche, **dadurch gekennzeichnet, dass** eine Summe von einer zeitlichen Länge einer in einer Kurzschlussphase (KP) vorgesehenen ersten Teilphase (KP-1) und einer zeitlichen Länge einer in derselben Kurzschlussphase (KP) vorgesehenen zweiten Teilphase (KP-2) einer zeitlichen Länge der Kurzschlussphase (KP) entspricht.

12. Kurzlichtbogen-Fügeverfahren nach einem der vorhergehenden Ansprüche, **dadurch gekennzeichnet, dass** ein Verhältnis einer zeitlichen Länge einer in einer Kurzschlussphase (KP) vorgesehenen ersten Teilphase (KP-1) zur zeitlichen Länge einer in der Kurzschlussphase (KP) vorgesehenen zweiten Teilphase (KP-2) einem vorgegebenen Faktor kt entspricht, wobei der Faktor kt vorzugsweise einem Wert größer 0,3 und kleiner 1,7 entspricht, oder vorzugsweise einem Wert größer 0,5 und kleiner 1,5 entspricht, oder vorzugsweise einem Wert größer 0,75 und kleiner 1,25 entspricht, oder vorzugsweise einem Wert größer 0,85 und kleiner 1,15 entspricht.

13. Kurzlichtbogen-Fügeverfahren nach einem der vorhergehenden Ansprüche **dadurch gekennzeichnet, dass** es sich beim Kurzlichtbogen-Fügeverfahren um ein Kurzlichtbogen-Schweißverfahren oder um ein Kurzlichtbogen-Lötverfahren handelt.

14. Kurzlichtbogen-Fügeverfahren nach einem der vorhergehenden Ansprüche, **dadurch gekennzeichnet, dass** ein Regelgesetz vorgegeben wird, vorzugsweise ein PID- Regelgesetz oder ein Sliding-Mode-Regelgesetz oder ein MPC-Regelgesetz oder ein Backstepping-Regelgesetz oder ein flachheitsbasiertes Regelgesetz, mit dem eine Korrektur des Kurzschlussstrom-Sollverlaufes ($I_{soll}$) in Abhängigkeit einer Abweichung des Tropfen-Istwertes ($T_{ist}$) vom Tropfe-Sollwert ($T_{soll}$), vorzugsweise in Abhängigkeit des Tropfen-Vergleichsergebnisses ($e_\tau$), ermittelt wird.

15. Fügevorrichtung (1) zur Durchführung eines Kurzlichtbogen-Fügeverfahrens, aufweisend einen Brenner (4), eine Vorschubeinheit (12) zum Zuführen einer abschmelzenden Fügeelektrode (7) durch den Brenner, eine Stromquelle (2) zur elektrischen Versorgung der Fügeelektrode (7) und eine Steuereinheit (14) zur Steuerung der Fügevorrichtung (1), das Kurzlichtbogen-Fügeverfahren aufweisend Lichtbogenphasen (LP), in denen zwischen der abschmelzenden Fügeelektrode (7) und einem Werkstück (6) ein Lichtbogen (11) brennt, welcher die Fügeelektrode (7) in einem dem Werkstück (6) zugewandten Endbereich der Fügeelektrode (7) unter Ausbildung eines Schweißtropfens aufschmilzt, und sich mit den Lichtbogenphasen (LP) zyklisch abwechselnde Kurzschlussphasen (KP), in denen die Fügeelektrode (7) das Werkstück (6) berührt und ein Kurzschlussstrom (IK) zum Abschmelzen des Schweißtropfens (T) von der Stromquelle (2) durch den Schweißtropfen (T) in das Werkstück (6) fließt, **dadurch gekennzeichnet, dass** die Steuereinheit (14) dazu ausgebildet ist, in den Kurzschlussphasen (KP) jeweils vorzusehen:

- eine erste Teilphase (KP-1), in welcher der Kurzschlussstrom (IK) ausgehend von einem zu Beginn der ersten Teilphase (KP-1) vorliegenden Anfangsstrom ($IK_1$) erhöht wird auf einen vorgegeben Abschmelzstrom ($IK_m$),
- eine der ersten Teilphase (KP-1) nachfolgende zweite Teilphase (KP-2), in welcher

oder Kurzschlussstrom (IK) entsprechend einem vorgegebenen Kurzschlussstrom-Sollverlauf ($I_{soll}$) reduziert wird, und
o ein Tropfen-Istwert ($T_{ist}$) eines Tropfen-Parameters (RT) des Schweißtropfens (T) ermittelt und dazu herangezogen wird, den Kurzschlussstrom-Sollverlauf ($I_{soll}$) zu korrigieren.

FIG. 1

FIG. 2a

FIG. 2b

FIG. 2c

FIG. 2d

FIG. 3A

FIG. 3B

FIG. 3C

FIG. 4

FIG. 5

Europäisches
Patentamt

European
Patent Office

Office européen
des brevets

## EUROPÄISCHER RECHERCHENBERICHT

**Nummer der Anmeldung**

**EP 24 21 1658**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2011/248012 A1 (FUJIWARA JUNJI [JP]) 13. Oktober 2011 (2011-10-13) * Ansprüche; Abbildungen * ----- | 1-15 | INV. B23K9/09 B23K9/095 |
| | | | **RECHERCHIERTE SACHGEBIETE (IPC)** |
| | | | B23K |

Der vorliegende Recherchenbericht wurde für alle Patentansprüche erstellt

| Recherchenort | Abschlußdatum der Recherche | Prüfer |
|---|---|---|
| München | 8. Mai 2025 | Caubet, J |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

                                           
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 21 1658

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-05-2025

| Im Recherchenbericht angeführtes Patentdokument | Datum der Veröffentlichung | Mitglied(er) der Patentfamilie | Datum der Veröffentlichung |
|---|---|---|---|
| US 2011248012 A1 | 13-10-2011 | CN 102123812 A | 13-07-2011 |
| | | EP 2292362 A1 | 09-03-2011 |
| | | JP 5083415 B2 | 28-11-2012 |
| | | JP WO2010116695 A1 | 18-10-2012 |
| | | US 2011248012 A1 | 13-10-2011 |
| | | US 2013056453 A1 | 07-03-2013 |
| | | WO 2010116695 A1 | 14-10-2010 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1949997 A1